(19) Europäisches Patentamt
European Patent Office
Office européen des brevets

(11) EP 3 115 401 B1

(12) EUROPEAN PATENT SPECIFICATION

(45) Date of publication and mention of the grant of the patent:
**06.01.2021 Bulletin 2021/01**

(21) Application number: **14884546.4**

(22) Date of filing: **05.03.2014**

(51) Int Cl.:
***C08J 9/14*** *(2006.01)*
***C08G 18/50*** *(2006.01)*
***C08G 101/00*** *(2006.01)*
***C08J 9/00*** *(2006.01)*
***F25D 23/06*** *(2006.01)*
***C08G 18/48*** *(2006.01)*
***C08G 18/42*** *(2006.01)*
***C08G 18/76*** *(2006.01)*
***C08G 18/40*** *(2006.01)*

(86) International application number:
**PCT/CN2014/072883**

(87) International publication number:
**WO 2015/131340 (11.09.2015 Gazette 2015/36)**

(54) **LOW-THERMAL CONDUCTIVITY RIGID POLYURETHANE FOAM WITH C-PENTANE AS MAIN FOAMING AGENT AND MANUFACTURING METHOD AND APPLICATIONS THEREOF**

POLYURETHANHARTSCHAUMSTOFF MIT NIEDRIGER THERMISCHER LEITFÄHIGKEIT MIT C-PENTAN ALS HAUPTTREIBMITTEL SOWIE HERSTELLUNGSVERFAHREN UND ANWENDUNGEN DAVON

MOUSSE DE POLYURÉTHANE RIGIDE À FAIBLE CONDUCTIVITÉ THERMIQUE AVEC DU C-PENTANE COMME AGENT GONFLANT PRINCIPAL ET PROCÉDÉ DE FABRICATION ET APPLICATIONS ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.01.2017 Bulletin 2017/02**

(73) Proprietor: **Hisense Ronshen Guangdong Refrigerator Co., Ltd.**
**Foshan, Guangdong 528303 (CN)**

(72) Inventors:
- **HU, Feng**
  **Foshan**
  **Guangdong 528303 (CN)**
- **CAO, Lijun**
  **Foshan**
  **Guangdong 528303 (CN)**
- **HU, Zhe**
  **Foshan**
  **Guangdong 528303 (CN)**
- **LIU, Li**
  **Foshan**
  **Guangdong 528303 (CN)**

(74) Representative: **Pfenning, Meinig & Partner mbB**
**Patent- und Rechtsanwälte**
**Theresienhöhe 11a**
**80339 München (DE)**

(56) References cited:
**WO-A1-2013/082963**
**WO-A1-2013/082963**
**CN-A- 101 952 336**
**CN-A- 102 124 043**
**CN-A- 102 264 861**
**CN-A- 103 804 711**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Field of Technology

The present application relates to the technical field of rigid polyurethane foams, and particularly to a rigid polyurethane foam and a manufacturing method and applications thereof.

Background

C-pentane, as the present most consumable and most popular rigid polyurethane foam foaming agent in the industries of refrigerators and freezers both in China and abroad, has the advantages of good environmental friendliness and simple operation. Furthermore, C-pentane as a petrochemical product has mature refining process, easily available and low price, and thus has been widely used in refrigerating appliances as a preferred foaming agent in replace of CFC-11 (trichlorofluoromethane) and HCFC-141b (dichlorofluoroethane). C-pentane dominates the field of polyurethane foaming agents. However, C-pentane also has prominent defects, specifically: C-pentane is flammable, and it is thus required to construct ventilation facilities during the production and application; the resulting foam cannot satisfy the increasing standards of energy efficiency of household appliances due to its low thermal insulating property and high overall energy consumption; and high boiling point and low vapor pressure result in low strength and high filling intensity of the foam and more foaming raw materials are thus consumed.

The disadvantages of high energy consumption and high resource consumption of C-pentane have always been problems to be overcome in the PU field, but it is difficult to achieve a breakthrough effectively. The root cause is that it is difficult to find an approach that can meet the requirements of environmental regulations and make up inherent defects of C-pentane. This situation does not change until HFO-1233zd (1-chloro-3,3,3-trifluoropropene) is introduced. The physical and chemical properties of C-pentane and HFO-1233zd are shown in Table 1.

Table 1: Physical and chemical properties of C-pentane and HFO-1233zd

| Foaming agent | Molecular structure | ODP (Ozone Depleting Potential) | GWP (Global Warming Potential) | Boiling point (°C) | Saturated vapor pressure KPa (20°C) | Thermal conductivity (20°C, mW/m.K) | Explosion limit (%) |
|---|---|---|---|---|---|---|---|
| C-pentane | 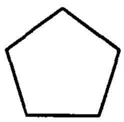 | 0 | 11 | 49 | 45 | 12 | 1.4-8.1 |
| HFO-1233zd | 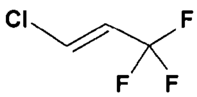 | ≈0* | 7 | 19 | 108 | 9 | / |
| *: Verified by the National Institute of Standards and Technology (NIST) | | | | | | | |

From the above table, it can be known that the ozone depleting potential (ODP) of both C-pentane and HFO-1233zd is 0; the global warming potential (GWP) of both C-pentane and HFO-1233zd is less than 15; HFO-1233zd also has characteristics of low boiling point, low thermal conductivity and high vapor pressure and its molecules have a structure with multiple fluorine atoms, so it is expected to be used as a nucleating additive to make up the inherent defects of C-pentane.

In Version 1 of Handbook of Plastic Industry by LI, Junxian in 1999, relevant theoretical research stated that the thermal conductivity of the foam is composed of several factors:

$$\lambda_F=\lambda_G+\lambda_S+\lambda_R+\lambda_C,$$

where: $\lambda_F$: thermal conductivity of the rigid foam;

$\lambda_G$: thermal conductivity of gas inside cells;

$\lambda_S$: thermal conductivity of solids;

$\lambda_R$: radiation conductivity; and

$\lambda_C$: convective thermal conductivity.

In this formula, the thermal conductivity of solids is relatively constant, and the convective thermal conductivity may be ignored when the size of rigid foam cells is less than 2 mm. In the case where the main gas components inside the cells are known, radiation conductivity is the main factor which influences the thermal conductivity of the rigid foam. The most effective approach to reduce the radiation conductivity is to reduce the size of cells.

Williams et al. (WO2013/082963A1) disclose blowing agent compositions comprising HFO-1233zd and a second component selected from cyclopentane, isopentane, n-pentane, and combinations thereof.

Summary of the Disclosure

An objective of the present application is to provide a rigid polyurethane foam with low thermal conductivity, in order to overcome deficiencies of the existing rigid polyurethane foams such as high thermal conductivity. The appropriate adjustment of the formulation can cause the thermal conductivity of the prepared rigid polyurethane foam to be greatly reduced (which can be as low as 0.01800 W/m.K or below).

Another objective of the present application is to provide a method for preparing the rigid polyurethane foam.

Yet another objective of the present application is to provide application of the rigid polyurethane foam in manufacturing refrigerators and freezers.

To achieve those purposes, the present application complies with the following technical solutions.

A rigid polyurethane foam is provided, and the rigid polyurethane foam is prepared from the following raw materials in parts by weight through mixing and reaction:

135-165 parts of polyisocyanate;
100 parts of polyol composition;
10-16 parts of C-pentane;
1.8-2.3 parts of catalyst;
1.8-2.5 parts of silicone oil;
1.6-2.4 parts of water;
and 1-chloro-3,3,3-trifluoropropene accounting for 1%-3% of the total weight of the raw materials;

wherein the polyol composition consists of polyether polyols and aromatic polyester polyols, and the aromatic polyester polyols account for 8-15 parts in weight in the polyol composition.

This range includes any specific numerical values, for example, but not limited to, 8 parts, 9 parts, 10 parts, 11 parts, 12 parts, 13 parts, 14 parts or 15 parts.

Wherein, the polyisocyanate is polymethylene polyphenyl polyisocyanate.

Wherein, the polyether polyols are prepared by the addition polymerization reaction of one or more of sucrose, glycerine, toluenediamine, sorbitol, ethylenediamine, diol or ethanolamine, as initiators, and oxyalkylene.

Wherein, the aromatic polyester polyols are prepared by the synthesis of at least one of phthalic acid, isophthalic acid, terephthalic acid, halogen substituted benzenedicarboxylate and anhydrides thereof and at least one of ethylene glycol, propylene glycol, diethylene glycol, neopentyl glycol and bisphenol A with an aromatic ring.

1-chloro-3,3,3-trifluoropropene (HFO-1233zd) has an ODP of 0 and a GWP of less than 15, and also has characteristics of low boiling point, low thermal conductivity and high vapor pressure. Therefore, mixing a certain amount of HFO-1233zd with C-pentane can effectively make up the weaknesses of C-pentane (foaming agent) such as high thermal conductivity and low foam strength and improve the performance of the foam. In addition, it was unexpectedly found by the inventor that the HFO-1233zd may also be used as a nucleating agent since its molecules have a structure with multiple fluorine atoms, and the application of the HFO-1233zd in manufacturing rigid polyurethane foam plastics can result in smaller, finer and more uniform cells, thereby facilitating reducing the thermal conductivity of the foam and improving the structure and strength of cells. Furthermore, the HFO-1233zd is not flammable, so the safety of the C-pentane foaming production can be improved.

Meanwhile, aromatic polyether polyol monomers and aromatic polyester polyol monomers are introduced into the polyol composition in the raw materials, and therefore, the application of the polyol composition in manufacturing rigid polyurethane foam plastics can result in smaller, finer and more uniform cells, so that the thermal conductivity of the foam is further reduced and a rigid polyurethane foam with low thermal conductivity is manufactured.

Wherein, the aromatic polyether polyols obtained by the addition polymerization reaction of toluenediamine as an initiator and oxyalkylene account for 15-40 parts in weight in the polyol composition. This range includes any specific numerical values, for example, but not limited to, 15 parts, 20 parts, 25 parts, 30 parts, 35 parts or 40 parts.

Wherein, the aromatic polyether polyols obtained by the addition polymerization reaction of toluenediamine as an initiator and oxyalkylene account for 20-25 parts in weight in the polyol composition.

Wherein, the aromatic polyester polyols account for 12-15 parts in weight in the polyol composition.

In the rigid polyurethane foam, 1-chloro-3,3,3-trifluoropropene accounts for 1%-3% of the total weight of the raw materials. This range includes any specific numerical values, for example, but not limited to, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9% or 3.0%.

In the rigid polyurethane foam, 1-chloro-3,3,3-trifluoropropene accounts for 2%-3% of the total weight of the raw materials.

In the rigid polyurethane foam, 1-chloro-3,3,3-trifluoropropene accounts for 2.5%-3% of the total weight of the raw materials.

As a preferred solution, the rigid polyurethane foam is prepared from the following raw materials in parts by weight:

140-160 parts of polyisocyanate;
100 parts of polyol composition;
11-14 parts of C-pentane;
1.8-2.1 parts of catalyst;
1.9-2.4 parts of silicone oil;
1.9-2.2 parts of water; and
1-chloro-3,3,3-trifluoropropene accounting for 2.0%-3.0% of the total weight of the raw materials.

As a further preferred solution, the rigid polyurethane foam is prepared from the following raw materials in parts by weight:

145-155 parts of polyisocyanate;
100 parts of polyol composition;
11.0-12.5 parts of C-pentane;
1.8-2.0 parts of catalyst;
2.0-2.3 parts of silicone oil;
1.9-2.1 parts of water; and
1-chloro-3,3,3-trifluoropropene accounting for 2.5%-3.0% of the total weight of the raw materials.

A method for preparing the rigid polyurethane foam is provided, comprising the following steps:

S1: evenly mixing polyol composition, C-pentane, 1-chloro-3,3,3-trifluoropropene, catalyst, silicone oil and water in proportion; and
S2: evenly mixing the mixture obtained in step S1 with polyisocyanate in proportion, and then foaming at a pressure from 110 bar to 160 bar.

As a preferred solution, the 1-chloro-3,3,3-trifluoropropene in step S1 is cooled to 10 °C to 19°C and then evenly mixed with C-pentane and polyol composition, wherein the temperature of the C-pentane is from 10°C to 30°C, and the temperature of the mixture after the mixing in step S1 is from 18°C to 25°C.

Compared with the prior art, the present application has the following beneficial effects.

(1) In the present application, C-pentane is used as the main component foaming agent, and a certain amount of HFO-1233zd is added. In this way, the advantages of low cost and mature technology of C-pentane are fully utilized, and the HFO-1233zd also has characteristics of low boiling point, low thermal conductivity and high vapor pressure. The coordinated use of C-pentane and HFO-1233zd reduces the thermal conductivity of the foam and increases the strength of the foam.

(2) The component HFO-1233zd in the present application contains a structure with multiple fluorine atoms, and thus can be used as a nucleating agent. This can result in smaller, finer and more uniform cells, and the structure and strength of cells are further improved, thereby facilitating reducing the thermal conductivity, improving the performance of the foam, and being more energy-saving.

(3) The component HFO-1233zd in the present application is not flammable and contains no volatile organics (VOC), the ozone depleting potential (ODP) thereof is 0, and the global warming potential (GWP) is less than 10. The HFO-1233zd itself has the function of a foaming agent. The HFO-1233zd is environmentally friendly.

(4) Since the HFO-1233zd has a low boiling point so that the foam may have excellent fluidity, and also has a high vapor pressure. Manufacturing the rigid polyurethane foam by the method of the present application can increase

the strength of the foam, reduce the consumption of foaming raw materials, and save resources.

(5) In the present application, the premixed polyether polyol formulation is optimized: preferred aromatic polyether monomers and aromatic polyester monomers are used so that the cells are smaller and finer and the thermal conductivity is reduced; with the addition of the HFO-1233zd, the polyurethane foam with low thermal conductivity can be prepared.

The cells of the rigid polyurethane foam plastics prepared from the composition of the present application are finer and more uniform, so that the thermal conductivity (which can be as low as 0.01800 W/m.K or below) is greatly reduced and the strength of the foam is increased; the thermal insulating effect of the thermal insulating layer is improved, and the energy consumption is reduced; it is good in environmental friendliness (ODP=0, GWP<15), and it is safer than foaming by a single component (C-pentane only). The rigid polyurethane foam according to the present application has a positive role in promoting upgrading and updating of the existing C-pentane foaming technologies for refrigerators.

## Brief Description of the Drawings

Fig. 1 is an electron micrograph of the rigid polyurethane foam prepared in embodiments and comparison examples, wherein the left picture is the foam prepared from a single component (C-pentane only) system in Comparison Example 3, the middle picture is the foam prepared from a C-pentane + HFO-1233zd system without aromatic polyester in Comparison Example 4, and the right picture is the foam prepared in Embodiment 3.

## Detailed Description of the Embodiments

The present application will be further described below by embodiments. Those embodiments are merely typical illustrations of the present application, and the present application is not limited thereto.

The following raw materials are used in the present application:

polyether A: obtained by polymerization with oxyalkylene by using sucrose as an initiator; functionality: 8; and hydroxyl value: 370-415 mg/KOH/g;
polyether B: obtained by polymerization with oxyalkylene by using sucrose and glycerine as initiators; functionality: 5-6; and hydroxyl value: 360-390 mg/KOH/g;
polyether C: obtained by polymerization with oxyalkylene by using sorbitol as an initiator; functionality: 6; and hydroxyl value: 480-500 mg/KOH/g;
polyether D: obtained by polymerization with oxyalkylene by using toluenediamine as an initiator; functionality: 4; and hydroxyl value: 400-420 mg/KOH/g;
polyether E: obtained by polymerization with oxyalkylene by using ethylenediamine as an initiator; functionality: 4; and hydroxyl value: 630-700 mg/KOH/g;
polyester F: obtained by condensation of aromatic carboxylic acids or anhydrides and alcohols; functionality: 2-3; and hydroxyl value: 300-330mg/KOH/g; PS3152, produced by Nanjing Stepan Jinling Chemical Co., Ltd.;

C-pentane: produced by Shunde Meilong Cyclopentane Chemical Co., Ltd.;
HFO-1233zd foaming agent: produced by Honeywell, Inc.;
catalyst: TMR-2, PC-5, PC-8, produced by Air Products and Chemicals, Inc.;
silicone oil: a surfactant, produced by Evonik Degussa;
polyisocyanate: PM2010, produced by Yantai Wanhua Chemical Group Co., Ltd.; and
production equipment: high-pressure foaming machines produced by Hennecke GmbH.

Other raw materials in the embodiments of the present application may be purchased from the market.

Embodiments 1-2 are rigid polyurethane foams prepared according to common methods of the present application, and Embodiments 3-4 are rigid polyurethane foams prepared according to preferred methods of the present application.

Table 2

| | Embodiment 1 | Embodiment 2 | Embodiment 3 | Embodiment 4 | Comparison example 1 | Comparison example 2 | Comparison example 3 |
|---|---|---|---|---|---|---|---|
| Polyether A | 35 | / | 25 | / | 25 | 25 | 35 |
| Polyether B | / | 40 | 10 | 30 | 10 | 10 | / |
| Polyether C | 20 | 23 | 20 | 25 | 20 | 20 | 25 |
| Polyether D | 20 | 25 | 20 | 20 | 20 | 20 | 25 |
| Polyether E | 10 | / | 10 | 13 | 10 | 10 | 15 |
| Polyester F | 15 | 12 | 15 | 12 | 15 | 15 | / |
| Catalyst | 2.0 | 2.0 | 2.0 | 2.0 | 2.0 | 2.0 | 2.1 |
| Silicone oil | 2.3 | 2.3 | 2.3 | 2.3 | 2.3 | 2.3 | 2.3 |
| Water | 1.95 | 2.05 | 2.0 | 2.1 | 2.0 | 2.0 | 2.0 |
| PM2010 (polyisocyanate) | 141 | 148 | 150 | 160 | 144 | 155 | 150 |
| C-pentane | 12.5 | 12.0 | 11.5 | 11.0 | 11.0 | / | 13.0 |
| HFO-1233zd/total weight of the raw materials (%) | 1.50 | 2.05 | 2.50 | 2.95 | 3.65 | 10.00 | / |
| Free rise foam density ($kg/m^3$) | 24.20 | 23.75 | 23.60 | 23.50 | 23.68 | 24.00 | 25.44 |
| Density of molded foam core ($kg/m^3$) | 32.30 | 32.06 | 31.56 | 31.78 | 31.54 | 31.47 | 35.51 |
| Thermal conductivity (W/m.K) | 0.01910 | 0.01856 | 0.01788 | 0.01757 | 0.01748 | 0.01728 | 0.02034 |
| Compressive strength (vertical) Mpa | 0.130 | 0.133 | 0.138 | 0.139 | 0.140 | 0.142 | 0.141 |
| Size stability % (-30°C, 24h) | -0.41 | -0.30 | -0.22 | -0.26 | -0.22 | -0.27 | -0.19 |

It can be known from Embodiments 1-4 that, in the rigid polyurethane foam plastics prepared from a foaming system which is formed by adding a proper amount of HFO-1233zd (an additive) that may be used as a nucleating agent into the C-pentane system and then optimizing the premixed polyether polyol formulation and adding a certain amount of preferred aromatic polyethers and aromatic polyesters or other components in the premixed polyether polyols, the thermal conductivity of the foam is significantly reduced, and the thermal insulating effect is improved and is significantly better than the single-component (C-pentane only) foaming system in Comparison Example 3.

It can be known from Embodiments 1-4 and Comparison Example 3 that the compressive strengths are close to each other although there is a difference of about 3 kg/m$^3$ in density. It is indicated that the addition of HFO-1233zd, aromatic polyether polyols and aromatic polyester polyols may also increase the strength of the foam.

It can be known from Embodiments 1-4 and Comparison Examples 1-2 that the thermal conductivity of the foam is minimized (which can be as low as 0.01800 mW/m.K or below) when HFO-1233zd accounts for about 2.5% or more of the total weight of the foaming raw materials. At this moment, if the amount of HFO-1233zd is continuously increased, within a certain range, the improvement and reduction of the thermal conductivity are not obvious, because the main components of the foaming agent inside the cells are still C-pentane and a proper amount of HFO-1233zd that may be used as the nucleating agent. In this case, it is not obvious to continuously add a certain amount of HFO-1233zd to facilitate nucleation. The effect of the HFO-1233zd in improving the thermal conductivity as the foaming agent is also not obvious because its content in percentage is too small. When analyzed in consideration of cost and foam performance, it is regarded to be the most cost-effective when HFO-1233zd accounts for 2.5%-3.0% of the total weight of the foaming raw materials.

Table 3

| | Embodiment 3 | Comparison Example 4 | Comparison Example 5 |
|---|---|---|---|
| Polyether A | 25 | 35 | 25 |
| Polyether B | 10 | 10 | 10 |
| Polyether C | 20 | 25 | 20 |
| Polyether D | 20 | 20 | / |
| Polyether E | 10 | 10 | 15 |
| Polyester F | 15 | / | / |
| Catalyst | 2.0 | 2.0 | 2.0 |
| Silicone oil | 2.3 | 2.3 | 2.3 |
| Water | 2.0 | 2.0 | 2.0 |
| PM2010 (polyisocyanate) | 150 | 150 | 150 |
| C-pentane | 11.5 | 11.5 | 11.5 |
| HFO-1233zd/total weight of the raw materials (%) | 2.50 | 2.50 | 2.50 |
| Free rise foam density (kg/m$^3$) | 23.60 | 23.70 | 23.84 |
| Density of molded foam core (kg/m$^3$) | 31.56 | 31.97 | 31.92 |
| Thermal conductivity (W/m.K) | 0.01788 | 0.01811 | 0.01823 |
| Compressive strength (vertical) Mpa | 0.138 | 0.135 | 0.134 |
| Size stability % (-30°C, 24h) | -0.22 | -0.25 | -0.24 |

It can be known from Embodiment 3 and Comparison Examples 4-5 that the thermal conductivity of the foam can be most effectively improved by adding a proper amount of HFO-1233zd in the C-pentane system and by using aromatic polyether polyols and aromatic polyester polyols in the premixed polyether polyol formulation.

Table 4

| | Refrigerator manufactured in Embodiment 3 | Refrigerator manufactured in Comparison Example 3 |
|---|---|---|
| Refrigerant charge (g) | 7450 | 8200 |

(continued)

| | Refrigerator manufactured in Embodiment 3 | Refrigerator manufactured in Comparison Example 3 |
|---|---|---|
| 1 ($kg/m^3$) | 31.17 | 36.54 |
| 2 ($kg/m^3$) | 31.75 | 35.44 |
| 3 ($kg/m^3$) | 31.97 | 34.92 |
| 4 ($kg/m^3$) | 31.52 | 35.66 |
| 5 ($kg/m^3$) | 31.65 | 34.64 |
| Average density ($kg/m^3$) | 31.66 | 35.51 |
| Range of density (Max-min) | 0.8 | 1.9 |

Note: Those embodiments and comparison examples are all foamed by high-pressure foaming machines in two-door refrigerator molds having a volume of 300L produced by Hisense Ronshen Refrigerator Co.,LTD.

It can be known from Table 4 that the range of density (max-min) of the refrigerator foam manufactured in Embodiment 3 is 0.8, while the range of density (max-min) of the refrigerator foam manufactured in Comparison Example 3 is 1.9. It is indicated that the addition of HFO-1233zd causes the foam to have more excellent fluidity.

In Fig. 1, the left picture is the foam prepared from a single component (C-pentane only) system in Comparison Example 3, the middle picture is the foam prepared from a C-pentane + HFO-1233zd system without aromatic polyester in Comparison Example 4, and the right picture is the foam prepared in Embodiment 3. It can be seen from the electron micrograph of Fig. 1 that the size of cells gradually decreases from left picture to right picture. It is indicated that the addition of HFO-1233zd and aromatic polyeaster polyols causes cells of the rigid polyurethane foam more uniform and finer.

The application of HFO-1233zd (an additive) in the C-pentane foaming system as a nucleating agent and the improvement of the formulation by using aromatic polyethers and aromatic polyeasters can effectively overcome the defect of high thermal conductivity which occurs when the C-pentane-only system is used. Meanwhile, the safety of foaming by C-pentane can be improved since HFO-1233zd is not flammable. Furthermore, due to VOC=0, ODP=0 and GWP<10, by the method for preparing the rigid polyurethane foam from the composition of the present application, the energy-saving effect, economic benefits, safety and environmental friendliness of refrigerator products can be better realized.

The foregoing descriptions are merely preferred embodiments of the present application and not intended to limit the present application.

## Claims

**1.** A rigid polyurethane foam, **characterized in that** the rigid polyurethane foam is prepared from the following raw materials in parts by weight through mixing and reaction:

135-165 parts of polyisocyanate;
100 parts of polyol composition;
10-16 parts of C-pentane;
1.8-2.3 parts of catalyst;
1.8-2.5 parts of silicone oil;
1.6-2.4 parts of water; and
1-chloro-3,3,3-trifluoropropene accounting for 1%-3% of the total weight of the raw materials;

wherein the polyol composition consists of polyether polyols and aromatic polyester polyols, and the aromatic polyester polyols account for 8-15 parts in weight in the polyol composition.

**2.** The rigid polyurethane foam according to claim 1, **characterized in that** the rigid polyurethane foam is prepared from the following raw materials in parts by weight through mixing and reaction:

140-160 parts of polyisocyanate;
100 parts of polyol composition;
11-14 parts of C-pentane;
1.8-2.1 parts of catalyst;
1.9-2.4 parts of silicone oil;
1.9-2.2 parts of water; and
1-chloro-3,3,3-trifluoropropene accounting for 2.0%-3.0% of the total weight of the raw materials.

**3.** The rigid polyurethane foam according to claim 1, **characterized in that** the rigid polyurethane foam is prepared from the following raw materials in parts by weight through mixing and reaction:

145-155 parts of polyisocyanate;
100 parts of polyol composition;
11.5-12.5 parts of C-pentane;
1.8-2.0 parts of catalyst;
2.0-2.3 parts of silicone oil;
1.9-2.1 parts of water; and
1-chloro-3,3,3-trifluoropropene accounting for 2.5%-3.0% of the total weight of the raw materials.

**4.** The rigid polyurethane foam according to claim 1, **characterized in that** the polyisocyanate is polymethylene polyphenyl polyisocyanate.

**5.** The rigid polyurethane foam according to claim 1, **characterized in that** the polyether polyols are prepared by the addition polymerization reaction of one or more of sucrose, glycerine, toluenediamine, sorbitol, ethylenediamine, diol or ethanolamine, as initiators, and oxyalkylene.

**6.** The rigid polyurethane foam according to claim 5, **characterized in that** the aromatic polyether polyols obtained by the addition polymerization reaction of toluenediamine as an initiator and oxyalkylene account for 15-40 parts in weight in the polyol composition.

**7.** The rigid polyurethane foam according to claim 6, **characterized in that** the aromatic polyether polyols obtained by the addition polymerization reaction of toluenediamine as an initiator and oxyalkylene account for 20-25 parts in weight in the polyol composition.

**8.** The rigid polyurethane foam according to claim 1, **characterized in that** the aromatic polyester polyols are prepared by the synthesis of at least one of phthalic acid, isophthalic acid, terephthalic acid, halogen substituted benzenedicarboxylate and anhydrides thereof and at least one of ethylene glycol, propylene glycol, diethylene glycol, neopentyl glycol and bisphenol A with an aromatic ring.

**9.** The rigid polyurethane foam according to claim 1, **characterized in that** the aromatic polyester polyols account for 12-15 parts in weight in the polyol composition.

**10.** The rigid polyurethane foam according to claim 1, **characterized in that** in the rigid polyurethane foam, 1-chloro-3,3,3-trifluoropropene accounts for 2%-3% of the total weight of the raw materials.

**11.** The rigid polyurethane foam according to claim 1, **characterized in that** in the rigid polyurethane foam, 1-chloro-3,3,3-trifluoropropene accounts for 2.5%-3% of the total weight of the raw materials.

**12.** A method for preparing rigid polyurethane foam according to any one of claims 1 to 11, comprising the following steps:

S1: evenly mixing polyol composition, C-pentane, 1-chloro-3,3,3-trifluoropropene, catalyst, silicone oil and water in proportion; and
S2: evenly mixing the mixture obtained in step S1 with polyisocyanate in proportion, and then foaming at a pressure from 110 bar to 160 bar.

**13.** The method for preparing rigid polyurethane foam according to claim 12, **characterized in that** the 1-chloro-3,3,3-trifluoropropene in step S1 is cooled to 10°C to 19 °C and then evenly mixed with C-pentane and polyol composition, wherein the temperature of the C-pentane is from 10°C to 30°C, and the temperature of the mixture after the mixing

in step S1 is from 18°C to 25°C.

**14.** The method for preparing rigid polyurethane foam according to claim 12, **characterized in that** in step S1, the polyol composition is 100 parts, the C-pentane is 11-14 parts, the catalyst is 1.8-2.1 parts, the silicone oil is 1.9-2.4 parts, the water is 1.9-2.2 parts and 1-chloro-3,3,3-trifluoropropene accounts for 2.0%-3.0% of the total weight of the raw materials, and in step S2, the polyisocyanate is 140-160 parts.

**15.** Applications of the rigid polyurethane foam of any one of claims 1 to 11 in manufacturing refrigerators and freezers.

## Patentansprüche

**1.** Polyurethan-Hartschaumstoff, **dadurch gekennzeichnet, dass** der Polyurethan-Hartschaumstoff aus den folgenden Ausgangsstoffen in Gewichtsteilen durch Mischen und Umsetzen hergestellt ist:

135-165 Teile Polyisocyanat;
100 Teile Polyolzusammensetzung;
10-16 Teile C-Pentan;
1,8-2,3 Teile Katalysator;
1,8-2,5 Teile Silikonöl;
1,6-2,4 Teile Wasser; und
1-Chlor-3,3,3-Trifluorpropen, das 1,0 % bis 3,0 % am Gesamtgewicht der Ausgangsstoffe ausmacht;

wobei
die Polyolzusammensetzung aus Polyetherpolyolen und aromatischen Polyesterpolyolen besteht, und die aromatischen Polyesterpolyole 8-15 Gewichtsteile in der Polyolzusammensetzung ausmachen.

**2.** Polyurethan-Hartschaumstoff nach Anspruch 1, **dadurch gekennzeichnet, dass** der Polyurethan-Hartschaumstoff aus den folgenden Ausgangsstoffen in Gewichtsteilen durch Mischen und Umsetzen hergestellt ist:

140-160 Teile Polyisocyanat;
100 Teile Polyolzusammensetzung;
11-14 Teile C-Pentan;
1,8-2,1 Teile Katalysator;
1,8-2,4 Teile Silikonöl;
1,9-2,2 Teile Wasser; und
1-Chlor-3,3,3-Trifluorpropen, das 2,0 % bis 3,0 % am Gesamtgewicht der Ausgangsstoffe ausmacht.

**3.** Polyurethan-Hartschaumstoff nach Anspruch 1, **dadurch gekennzeichnet, dass** der Polyurethan-Hartschaumstoff aus den folgenden Ausgangsstoffen in Gewichtsteilen durch Mischen und Umsetzen hergestellt ist:

145-155 Teile Polyisocyanat;
100 Teile Polyolzusammensetzung;
11.5-12.5 Teile C-Pentan;
1,8-2,0 Teile Katalysator;
2,0-2,3 Teile Silikonöl;
1,9-2,1 Teile Wasser; und
1-Chlor-3,3,3-Trifluorpropen, das 2,5 % bis 3,0 % am Gesamtgewicht der Ausgangsstoffe ausmacht.

**4.** Polyurethan-Hartschaumstoff nach Anspruch 1, **dadurch gekennzeichnet, dass** das Polyisocyanat Polymethylen-Polyphenyl-Polyisocyanat ist.

**5.** Polyurethan-Hartschaumstoff nach Anspruch 1, **dadurch gekennzeichnet, dass** die Polyetherpolyole durch die Additionspolymerisationsreaktion von einem oder mehreren von Saccharose, Glyzerin, Toluoldiamin, Sorbit, Ethylendiamin, Diol oder Ethanolamin, als Initiatoren, und Oxyalkylen hergestellt sind.

**6.** Polyurethan-Hartschaumstoff nach Anspruch 5, **dadurch gekennzeichnet, dass** die aromatischen Polyetherpolyole, die durch die Additionspolymerisationsreaktion von Toluoldiamin als Initiator und Oxyalkylen erhalten werden,

15-40 Gewichtsteile in der Polyolzusammensetzung ausmachen.

7. Polyurethan-Hartschaumstoff nach Anspruch 6, **dadurch gekennzeichnet, dass** die aromatischen Polyetherpolyole, die durch die Additionspolymerisationsreaktion von Toluoldiamin als Initiator und Oxyalkylen erhalten werden, 20-25 Gewichtsteile in der Polyolzusammensetzung ausmachen.

8. Polyurethan-Hartschaumstoff nach Anspruch 1, **dadurch gekennzeichnet, dass** die aromatischen Polyesterpolyole durch die Synthese von mindestens einem von Phthalsäure, Isophthalsäure, Terephthalsäure, halogensubstituiertem Benzoldicarboxylat und Anhydriden davon und mindestens einem von Ethylenglykol, Propylenglykol, Diethylenglykol, Neopentylglykol und Bisphenol A mit einem aromatischen Ring hergestellt sind.

9. Polyurethan-Hartschaumstoff nach Anspruch 1, **dadurch gekennzeichnet, dass** die aromatischen Polyesterpolyole 12-15 Gewichtsteile in der Polyolzusammensetzung ausmachen.

10. Polyurethan-Hartschaumstoff nach Anspruch 1, **dadurch gekennzeichnet, dass** in dem Polyurethan-Hartschaumstoff 1-Chlor-3,3,3-Trifluorpropen 2,0 % bis 3,0 % des Gesamtgewichts der Ausgangsstoffe ausmacht.

11. Polyurethan-Hartschaumstoff nach Anspruch 1, **dadurch gekennzeichnet, dass** in dem Polyurethan-Hartschaumstoff 1-Chlor-3,3,3-Trifluorpropen 2,5 % bis 3,0 % des Gesamtgewichts der Ausgangsstoffe ausmacht.

12. Verfahren zum Herstellen von Polyurethan-Hartschaumstoff nach einem der Ansprüche 1 bis 11, umfassend die folgenden Schritte:

    S1: gleichmäßiges Mischen von Polyolzusammensetzung, C-Pentan, 1-Chlor-3,3,3-Trifluorpropen, Katalysator, Silikonöl und Wasser im Verhältnis; und
    S2: gleichmäßiges Mischen der in Schritt S1 erhaltenen Mischung mit Polyisocyanat im Verhältnis und anschließendes Schäumen bei einem Druck von 110 bar bis 160 bar.

13. Verfahren zum Herstellen von Polyurethan-Hartschaumstoff nach Anspruch 12, **dadurch gekennzeichnet, dass** das 1-Chlor-3,3,3-Trifluorpropen in Schritt S1 auf 10 °C bis 19 °C abgekühlt wird und dann gleichmäßig mit C-Pentan und Polyolzusammensetzung gemischt wird, wobei die Temperatur des C-Pentans 10 °C bis 30 °C und die Temperatur der Mischung nach dem Mischen in Schritt S1 18 °C bis 25 °C beträgt.

14. Verfahren zum Herstellen von Polyurethan-Hartschaumstoff nach Anspruch 12, **dadurch gekennzeichnet, dass** in Schritt S1 die Polyolzusammensetzung 100 Teile, das C-Pentan 11-14 Teile, der Katalysator 1,8-2,1 Teile, das Silikonöl 1,9-2,4 Teile, das Wasser 1,9-2,2 Teile und 1-Chlor-3,3,3Ttrifluorpropen 2,0 %-3,0 % des Gesamtgewichts der Ausgangsstoffe ausmachen und in Schritt S2 das Polyisocyanat 140-160 Teile ausmacht.

15. Anwendungen des Polyurethan-Hartschaumstoffs nach einem der Ansprüche 1 bis 11 bei der Fertigung von Kühl- und Gefriergeräten.

## Revendications

1. Mousse de polyuréthane rigide, **caractérisée en ce que** la mousse de polyuréthane rigide est préparée à partir des matériaux bruts qui suivent selon certaines parties en poids par l'intermédiaire d'un mélange et d'une réaction :

    135 à 165 parties de polyisocyanate ;
    100 parties de composition de polyols ;
    10 à 16 parties de C-pentane ;
    1,8 à 2,3 parties de catalyseur ;
    1,8 à 2,5 parties d'huile de silicone ;
    1,6 à 2,4 parties d'eau ; et
    du 1-chloro-3,3,3-trifluoropropène comptant pour 1 % à 3 % du poids total des matériaux bruts ;

    dans laquelle :
    la composition de polyols est constituée par des polyols de polyéther aromatiques et par des polyols de polyester aromatiques, et les polyols de polyester aromatiques comptent pour 8 à 15 parties en poids dans la composition

de polyols.

2. Mousse de polyuréthane rigide selon la revendication 1, **caractérisée en ce que** la mousse de polyuréthane rigide est préparée à partir des matériaux bruts qui suivent selon certaines parties en poids par l'intermédiaire d'un mélange et d'une réaction :

    140 à 160 parties de polyisocyanate ;
    100 parties de composition de polyols ;
    11 à 14 parties de C-pentane ;
    1,8 à 2,1 parties de catalyseur ;
    1,8 à 2,4 parties d'huile de silicone ;
    1,9 à 2,2 parties d'eau ; et

    du 1-chloro-3,3,3-trifluoropropène comptant pour 2,0 % à 3,0 % du poids total des matériaux bruts.

3. Mousse de polyuréthane rigide selon la revendication 1, **caractérisée en ce que** la mousse de polyuréthane rigide est préparée à partir des matériaux bruts qui suivent selon certaines parties en poids par l'intermédiaire d'un mélange et d'une réaction :

    145 à 155 parties de polyisocyanate ;
    100 parties de composition de polyols ;
    11,5 à 12,5 parties de C-pentane ;
    1,8 à 2,0 parties de catalyseur ;
    2,0 à 2,3 parties d'huile de silicone ;
    1,9 à 2,1 parties d'eau ; et
    du 1-chloro-3,3,3-trifluoropropène comptant pour 2,5 % à 3,0 % du poids total des matériaux bruts.

4. Mousse de polyuréthane rigide selon la revendication 1, **caractérisée en ce que** le polyisocyanate est du polyméthylène polyphényle polyisocyanate.

5. Mousse de polyuréthane rigide selon la revendication 1, **caractérisée en ce que** les polyols de polyéther sont préparés au moyen de la réaction de polymérisation par addition d'un ou de plusieurs élément(s) constitutif(s) pris parmi le sucrose, la glycérine, la toluènediamine, le sorbitol, l'éthylènediamine, le diol ou l'éthanolamine, en tant qu'initiateurs, et d'oxyalkylène.

6. Mousse de polyuréthane rigide selon la revendication 5, **caractérisée en ce que** les polyols de polyéther aromatiques qui sont obtenus au moyen de la réaction de polymérisation par addition de toluènediamine en tant qu'initiateur et d'oxyalkylène comptent pour 15 à 40 parties en poids dans la composition de polyols.

7. Mousse de polyuréthane rigide selon la revendication 6, **caractérisée en ce que** les polyols de polyéther aromatiques qui sont obtenus au moyen de la réaction de polymérisation par addition de toluènediamine en tant qu'initiateur et d'oxyalkylène comptent pour 20 à 25 parties en poids dans la composition de polyols.

8. Mousse de polyuréthane rigide selon la revendication 1, **caractérisée en ce que** les polyols de polyester aromatiques sont préparés au moyen de la synthèse d'au moins un élément constitutif pris parmi l'acide phtalique, l'acide isophtalique, l'acide téréphtalique, le benzènedicarboxylate substitué par halogène et leurs anhydrides et d'au moins un élément constitutif pris parmi l'éthylène glycol, le propylène glycol, le diéthylène glycol, le néopentyl glycol et le bisphénol A avec un cycle aromatique.

9. Mousse de polyuréthane rigide selon la revendication 1, **caractérisée en ce que** les polyols de polyester aromatiques comptent pour 12 à 15 parties en poids dans la composition de polyols.

10. Mousse de polyuréthane rigide selon la revendication 1, **caractérisée en ce que**, dans la mousse de polyuréthane rigide, le 1-chloro-3,3,3-trifluoropropène compte pour 2 % à 3 % du poids total des matériaux bruts.

11. Mousse de polyuréthane rigide selon la revendication 1, **caractérisée en ce que**, dans la mousse de polyuréthane rigide, le 1-chloro-3,3,3-trifluoropropène compte pour 2,5 % à 3 % du poids total des matériaux bruts.

**12.** Procédé de préparation d'une mousse de polyuréthane rigide selon l'une quelconque des revendications 1 à 11, comprenant les étapes qui suivent :

S1 : le mélange uniforme d'une composition de polyols, de C-pentane, de 1-chloro-3,3,3-trifluoropropène, d'un catalyseur, d'huile de silicone et d'eau selon certaines proportions ; et
S2 : le mélange uniforme du mélange qui est obtenu au niveau de l'étape S1 avec du polyisocyanate selon certaines proportions, puis le moussage à une pression comprise entre 110 bars et 160 bars.

**13.** Procédé de préparation d'une mousse de polyuréthane rigide selon la revendication 12, **caractérisé en ce que** le 1-chloro-3,3,3-trifluoropropène au niveau de l'étape S1 est refroidi jusqu'à 10 °C à 19 °C puis est mélangé uniformément avec le C-pentane et la composition de polyols, dans lequel la température du C-pentane est comprise entre 10 °C et 30 °C, et la température du mélange après le mélange au niveau de l'étape S1 est comprise entre 18 °C et 25 °C.

**14.** Procédé de préparation d'une mousse de polyuréthane rigide selon la revendication 12, **caractérisé en ce que**, au niveau de l'étape S1, la composition de polyols est présente à hauteur de 100 parties, le C-pentane est présent à hauteur de 11 à 14 parties, le catalyseur est présent à hauteur de 1,8 à 2,1 parties, l'huile silicone est présente à hauteur de 1,9 à 2,4 parties, l'eau est présente à hauteur de 1,9 à 2,2 parties et le 1-chloro-3,3,3-trifluoropropène compte pour 2,0 % à 3,0 % du poids total des matériaux bruts, et au niveau de l'étape S2, le polyisocyanate est présent à hauteur de 140 à 160 parties.

**15.** Applications de la mousse de polyuréthane rigide selon l'une quelconque des revendications 1 à 11 au niveau de la fabrication des réfrigérateurs et des congélateurs.

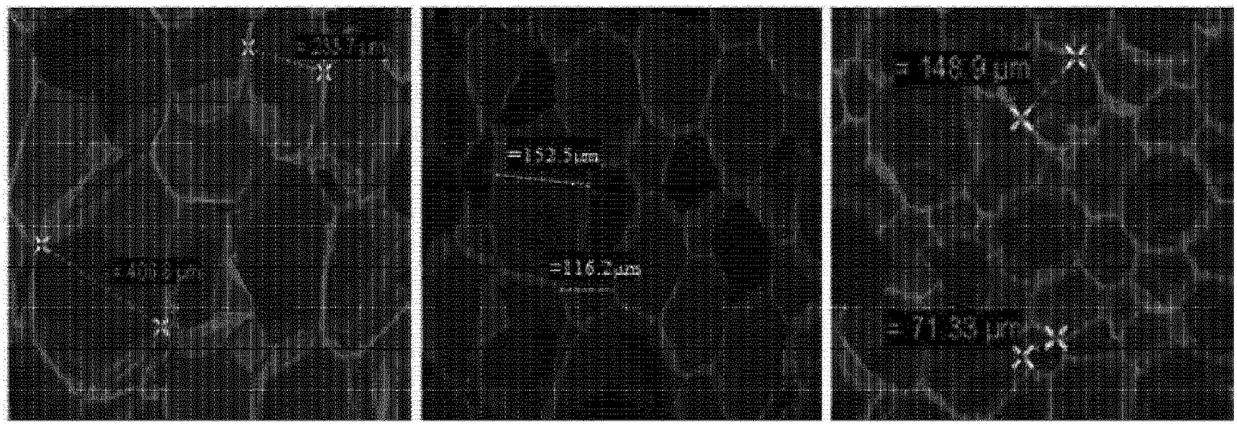


Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013082963A1 A, Williams


### Non-patent literature cited in the description


- **LI.** Handbook of Plastic Industry. 1999